# EUROPEAN PATENT APPLICATION

(11) **EP 4 322 437 A1**
(43) Date of publication of application: **14.02.2024**
(21) Application number: 21935604.5
(22) Date of filing: 09.04.2021
(51) Int. Cl.: H04L 1/18

(54) **METHOD FOR DETERMINING HARQ CODEBOOK, METHOD FOR RECEIVING HARQ FEEDBACK INFORMATION, AND APPARATUS THEREOF**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2021/086239
(87) International publication number: WO 2022/213378

(57) **Abstract**

The present disclosure relates to the technical field of wireless communications, and provides a method for determining an HARQ codebook, a method for receiving HARQ feedback information, and an apparatus thereof. The method for determining an HARQ codebook comprises: a terminal device determines, according to the HARQ enabled type for a plurality of PDSCH transmissions transmitted on the specified HARQ feedback resource, an HARQ codebook corresponding to the HARQ feedback resource. In this way, the terminal device determines an HARQ codebook corresponding to the HARQ feedback resource in combination with the HARQ enabled type for a plurality of PDSCH transmissions, and the method is applicable to a scenario where the HARQ is disabled and can normalize the HARQ feedback behavior of the terminal device.

## Description

### TECHNICAL FIELD

The disclosure relates to a field of communication technologies, and specifically to a method and an apparatus for determining an HARQ codebook, a method and an apparatus for receiving HARQ feedback information.

### BACKGROUND

The hybrid automatic repeat request (HARQ) mechanism supports a plurality of parallel HARQ process transmissions. That is, a transmitting end may initiate in parallel a plurality of physical downlink shared channel (PDSCH) transmissions.

In a satellite communication scenario, in order to avoid a large delay caused by a propagation distance, the HARQ mechanism supports an HARQ process with HARQ disabled. That is to say, some HARQ processes may be configured without performing HARQ feedback. However, the current HARQ semi-static codebook is designed for an HARQ process in the HARQ mechanism that only supports HARQ enabled. Currently, there is no scheme for determining a corresponding HARQ semi-static codebook for an HARQ process in the HARQ mechanism that supports HARQ disabled.

### SUMMARY

A first aspect of embodiments of the disclosure provides a method for determining a hybrid automatic repeat request (HARQ) codebook, applied to a terminal device. The method includes: determining, according to an HARQ enabling type for a plurality of physical downlink shared channel (PDSCH) transmissions on a specified HARQ feedback resource, an HARQ codebook corresponding to the specified HARQ feedback resource.

Optionally, determining according to the HARQ enabling types for the plurality of PDSCH transmissions transmitted on the specified HARQ feedback resource, the HARQ codebook corresponding to the specified HARQ feedback resource includes: in response to the HARQ enabling types for the plurality of PDSCH transmissions being HARQ enabled, determining, according to a result for the plurality of PDSCH transmissions, HARQ feedback information corresponding to the plurality of PDSCH transmissions in the HARQ codebook.

Optionally, determining according to the HARQ enabling types for the plurality of PDSCH transmissions transmitted on the specified HARQ feedback resource, the HARQ codebook corresponding to the specified HARQ feedback resource includes: in response to the HARQ enabling types for the plurality of PDSCH transmissions being HARQ disabled, determining that the HARQ codebook is empty; in response to the HARQ enabling types for the plurality of PDSCH transmissions being HARQ disabled, determining that HARQ feedback information corresponding to the plurality of PDSCH transmissions in the HARQ codebook is non- acknowledgement (NACK) information; or in response to the HARQ enabling types for the plurality of PDSCH transmissions being HARQ disabled, determining, according to a result for the plurality of PDSCH transmissions, HARQ feedback information corresponding to the plurality of PDSCH transmissions in the HARQ codebook.

Optionally, determining according to the HARQ enabling types for the plurality of PDSCH transmissions transmitted on the specified HARQ feedback resource, the HARQ codebook corresponding to the specified HARQ feedback resource includes: in response to HARQ enabling types for a part of the plurality of PDSCH transmissions being HARQ enabled, determining that the HARQ codebook only includes HARQ feedback information corresponding to the part of PDSCH transmissions.

Optionally, determining according to the HARQ enabling types for the plurality of PDSCH transmissions transmitted on the specified HARQ feedback resource, the HARQ codebook corresponding to the specified HARQ feedback resource includes: in response to HARQ enabling types for a part of the plurality of PDSCH transmissions being HARQ enabled, determining that the HARQ codebook is empty.

Optionally, after determining that the HARQ codebook is empty, the method further includes: in response to receiving an HARQ feedback indication from a network device, determining to send HARQ feedback information corresponding to the part of PDSCH transmissions to the network device.

Optionally, the method further includes: feeding back HARQ feedback information corresponding to the plurality of PDSCH transmissions to the network device on the specified HARQ feedback resource according to the HARQ codebook.

Optionally, feeding back HARQ feedback information corresponding to the plurality of PDSCH transmissions to the network device on the specified HARQ feedback resource according to the HARQ codebook includes: in response to the HARQ codebook being empty, giving up a feedback of the HARQ feedback information to the network device on the specified HARQ feedback resource; or in response to the HARQ codebook being non-empty, feeding back the HARQ feedback information in the HARQ codebook to the network device on the specified HARQ feedback resource.

A second aspect of embodiments of the disclosure provides a method for receiving HARQ feedback information, which is applied to a network device. The method includes: determining, according to HARQ enabling types for a plurality of PDSCH transmissions transmitted on a specified HARQ feedback resource, a reception mode of HARQ feedback information.

Optionally, determining according to HARQ enabling types for the plurality of PDSCH transmissions transmitted on the specified HARQ feedback resource, the reception mode of HARQ feedback information includes: in response to the HARQ enabling types for the plurality of PDSCH transmissions being HARQ enabled, determining to receive the HARQ feedback information on the specified HARQ feedback resource.

Optionally, determining according to HARQ enabling types for the plurality of PDSCH transmissions transmitted on the specified HARQ feedback resource, the reception mode of HARQ feedback information includes: in response to the HARQ enabling types for the plurality of PDSCH transmissions being HARQ disabled, determining not to receive the HARQ feedback information on the specified HARQ feedback resource; or in response to the HARQ enabling types for the plurality of PDSCH transmissions being HARQ disabled, determining to receive the HARQ feedback information on the specified HARQ feedback resource and to discard received HARQ feedback information.

Optionally, determining according to HARQ enabling types for the plurality of PDSCH transmissions transmitted on the specified HARQ feedback resource, the reception mode of HARQ feedback information includes: in response to HARQ enabling types for a part of the plurality of PDSCH transmissions being HARQ enabled, determining to receive the HARQ feedback information on the specified HARQ feedback resource.

Optionally, the method further includes: in response to failing to receive the HARQ feedback information of a terminal device on the specified HARQ feedback resource, sending an HARQ feedback indication to the terminal device to indicate the terminal device to feed back HARQ feedback information corresponding to the part of PDSCH transmissions.

A third aspect of embodiments of the disclosure provides an apparatus for determining an HARQ codebook, which is applied to a terminal device. The apparatus includes: a processing unit, configured to determine, according to HARQ enabling types for a plurality of PDSCH transmissions transmitted on a specified HARQ feedback resource, an HARQ codebook corresponding to the specified HARQ feedback resource.

Optionally, the processing unit is specifically configured to: in response to the HARQ enabling types for the plurality of PDSCH transmissions being HARQ enabled, determine, according to a result for the plurality of PDSCH transmissions, HARQ feedback information corresponding to the plurality of PDSCH transmissions in the HARQ codebook.

Optionally, the processing unit is specifically configured to: in response to the HARQ enabling types for the plurality of PDSCH transmissions being HARQ disabled, determine that the HARQ codebook is empty; in response to the HARQ enabling types for the plurality of PDSCH transmissions being HARQ disabled, determine that HARQ feedback information corresponding to the plurality of PDSCH transmissions in the HARQ codebook is NACK information; or in response to the HARQ enabling types for the plurality of PDSCH transmissions being HARQ disabled, determine, according to a result for the plurality of PDSCH transmissions, HARQ feedback information corresponding to the plurality of PDSCH transmissions in the HARQ codebook.

Optionally, the processing unit is specifically configured to: in response to HARQ enabling types for a part of the plurality of PDSCH transmissions being HARQ enabled, determine that the HARQ codebook only includes HARQ feedback information corresponding to the part of PDSCH transmissions.

Optionally, the processing unit is specifically configured to: in response to HARQ enabling types for a part of the plurality of PDSCH transmissions being HARQ enabled, determine that the HARQ codebook is empty.

Optionally, the processing unit is specifically configured to, in response to receiving an HARQ feedback indication from a network device, determine to send HARQ feedback information corresponding to the part of PDSCH transmissions to the network device.

Optionally, the apparatus further includes: a transceiver unit, configured to feed back HARQ feedback information corresponding to the plurality of PDSCH transmissions to the network device on the specified HARQ feedback resource according to the HARQ codebook.

Optionally, the transceiver unit is specifically configured to: in response to the HARQ codebook being empty, give up a feedback of the HARQ feedback information to the network device on the specified HARQ feedback resource; or in response to the HARQ codebook being non-empty, feed back the HARQ feedback information in the HARQ codebook to the network device on the specified HARQ feedback resource.

A fourth aspect of embodiments of the disclosure provides an apparatus for receiving HARQ feedback information, which is applied to a network device. The apparatus includes: a processing unit, configured to determine, according to HARQ enabling types for a plurality of PDSCH transmissions transmitted on a specified HARQ feedback resource, a reception mode of HARQ feedback information.

Optionally, the processing unit is specifically configured to: in response to the HARQ enabling types for the plurality of PDSCH transmissions being HARQ enabled, determine to receive the HARQ feedback information on the specified HARQ feedback resource.

Optionally, the processing unit is specifically configured to: in response to the HARQ enabling types for the plurality of PDSCH transmissions being HARQ disabled, determine not to receive the HARQ feedback information on the specified HARQ feedback resource; or in response to the HARQ enabling types for the plurality of PDSCH transmissions being HARQ disabled, determine to receive the HARQ feedback information on the specified HARQ feedback resource and to discard received HARQ feedback information.

Optionally, the processing unit is specifically configured to: in response to HARQ enabling types for a part of the plurality of PDSCH transmissions being HARQ enabled, determining to receive the HARQ feedback information on the specified HARQ feedback resource.

Optionally, the apparatus further includes: a transceiver unit, configured to in response to failing to receive the HARQ feedback information of a terminal device on the specified HARQ feedback resource, send an HARQ feedback indication to the terminal device to indicate the terminal device to feed back HARQ feedback information corresponding to the part of PDSCH transmissions.

A fifth aspect of embodiments of the disclosure provides a device for determining an HARQ codebook, including: a processor and a memory for storing a computer program. When the computer program is executed by the processor, the device is caused to execute the method for determining an HARQ codebook according to the first aspect of the embodiments of the disclosure.

A sixth aspect of embodiments of the disclosure provides a device for receiving HARQ feedback information, including: a processor and a memory for storing a computer program. When the computer program is executed by the processor, the device is caused to execute the method for receiving HARQ feedback information according to the second aspect of the embodiments of the disclosure.

A seventh aspect of embodiments of the disclosure provides a device for determining an HARQ codebook, including: an interface circuit for receiving and transmitting code instructions to a processor; and the processor for executing the code instructions to perform the method for determining the HARQ codebook according to the first aspect of the embodiments of the disclosure.

An eighth aspect of embodiments of the disclosure provides a device for receiving HARQ feedback information, including: an interface circuit for receiving and transmitting code instructions to a processor; and the processor for executing the code instructions to perform the method for receiving HARQ feedback information according to the second aspect of the embodiments of the disclosure.

A nineth aspect of embodiments of the disclosure provides a computer-readable storage medium storing instructions. When the instructions are executed, the method for determining an HARQ codebook is implemented according to the first aspect of the embodiments of the disclosure.

A tenth aspect of embodiments of the disclosure provides a computer-readable storage medium storing instructions. When the instructions are executed, the method for receiving HARQ feedback information is implemented according to according to the second aspect of the embodiments of the disclosure.

According to the method and the apparatus for determining an HARQ codebook, the method and the apparatus for receiving HARQ feedback information in the embodiments of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

### BRIEF DESCRIPTION OF THE DRAWINGS

In order to more clearly explain the technical solutions in the embodiments of the disclosure or the background, accompanying drawings needed to be used in the embodiments of the disclosure or the background may be described below.
FIG. 1 is a schematic diagram of an HARQ process in NR.
FIG. 2 is a flowchart of a method for determining an HARQ codebook according to an embodiment of the disclosure.
FIG. 3 is a flowchart of another method for determining an HARQ codebook according to an embodiment of the disclosure.
FIG. 4 is a first schematic diagram of HARQ feedback information in an embodiment of the disclosure.
FIG. 5 is a flowchart of another method for determining an HARQ codebook according to an embodiment of the disclosure.
FIG. 6 is a second schematic diagram of HARQ feedback information in an embodiment of the disclosure.
FIG. 7 is a flowchart of another method for determining an HARQ codebook according to an embodiment of the disclosure.
FIG. 8 is a third schematic diagram of HARQ feedback information in an embodiment of the disclosure.
FIG. 9 is a flowchart of another method for determining an HARQ codebook according to an embodiment of the disclosure.
FIG. 10 is a fourth schematic diagram of HARQ feedback information in an embodiment of the disclosure.
FIG. 11 is a flowchart of another method for determining an HARQ codebook according to an embodiment of the disclosure.
FIG. 12 is a fifth schematic diagram of HARQ feedback information in an embodiment of the disclosure.
FIG. 13 is a flowchart of another method for determining an HARQ codebook according to an embodiment of the disclosure.
FIG. 14 is a flowchart of another method for determining an HARQ codebook according to an embodiment of the disclosure.
FIG. 15 is a flowchart of a method for receiving HARQ feedback information according to an embodiment of the disclosure.
FIG. 16 is a flowchart of another method for receiving HARQ feedback information according to an embodiment of the disclosure.
FIG. 17 is a flowchart of another method for receiving HARQ feedback information according to an embodiment of the disclosure.
FIG. 18 is a flowchart of another method for receiving HARQ feedback information according to an embodiment of the disclosure.
FIG. 19 is a flowchart of another method for receiving HARQ feedback information according to an embodiment of the disclosure.
FIG. 20 is a structural schematic diagram of an apparatus for determining an HARQ codebook according to an embodiment of the disclosure.
FIG. 21 is a structural schematic diagram of an apparatus for receiving HARQ feedback information according to an embodiment of the disclosure.
FIG. 22 is a block diagram of a terminal device according to an embodiment of the disclosure.
FIG. 23 is a structural schematic diagram of a network device according to an embodiment of the disclosure.

### DETAILED DESCRIPTION

Exemplary embodiments may be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all the implementations consistent with the embodiments of the disclosure. Rather, they are merely examples of apparatuses and methods consistent with some aspects of the embodiments of the disclosure as detailed in the appended claims.

The terminology used in the embodiments of the disclosure is only for the purpose of describing specific embodiments and is not intended to limit the embodiments of the disclosure. As used in the embodiments of the disclosure and the appended claims, the singular forms "a", "an" and "the" are intended to include the plural forms as well, unless the context clearly dictates otherwise. It may also be understood that the term "and/or" as used herein refers to and includes any and all possible combinations of one or more of the associated listed items.

It should be understood that although the terms first, second, third, etc. may be used to describe various information in the embodiments of the disclosure, the information should not be limited to these terms. These terms are only used to distinguish information of the same type from each other. For example, without departing from the scope of the embodiments of the disclosure, first information may also be called second information, and similarly, second information may also be called first information. Depending on the context, the words "if' and "in case of' as used herein may be interpreted as "when" or "upon" or "in response to determining."

The embodiments of the disclosure are described in detail below, examples of which are illustrated in the accompanying drawings, throughout which the same or similar reference numerals refer to the same or similar elements. The embodiments described below with reference to the accompanying drawings are exemplary, intended to explain the disclosure and are not to be construed as limitations of the disclosure.

For ease of understanding, the terms involved in this disclosure is first introduced.

### 1. NTN refers to a Non-Terrestrial Network communication.

NTN communications, especially satellite communications, have been included in a discussion related to 5th Generation (5G) standards in the third generation partnership project (3GPP) because of their wide coverage, strong disaster resistance and large capacity. In a 5G New Radio (NR) research project for the NTN in the 3GPP, the TR38.811 (Rel-15) reports studied a deployment scenario of NTN networks and a channel model of NTN networks and the TR38.821 (Rel-16) reports studied a NTN-based next generation-radio access network (NG-RAN) architecture, defined and evaluated a solution of a network architecture integrated with the NTN network and 5G network.

NTN may be served as a supplement to the terrestrial networks (such as 5G networks) and provide continuity services for machine-to-machine (M2M)/ Internet Of Things (IoT) devices and mobility platform users. For example, in areas where the terrestrial networks cannot cover or that have high coverage costs (such as, the sea areas or high-speed rail areas), the NTN may be used to solve communication problems in the above areas, so that the reliability of the 5G networks may be thus enhanced. Alternatively, broadcast or multicast services are provided directly for user equipment (UE) at the network edge, so that the scalability of the 5G network is enhanced. Alternatively, independent operations may also be performed to provide unique services for areas (such as remote areas, isolated islands, etc.), so that the network services are ubiquitous.

Whether it is a satellite-ground integrated NTN or a standalone NTN, it may have greater effects on the performances compared with a typical 5G network, such as a coverage, a user bandwidth, a system capacity, a service reliability or a service availability, an energy consumption, and a connection density, may provide users with a more reliable and consistent service experience, may reduce network deployment costs of operators, connect the multidimensional space of air, sky, earth and sea, and thus form an integrated ubiquitous network pattern.

Compared with the terrestrial networks, the NTN networks have the characteristics of large transmission delays due to a long distance between the communicating parties. For example, in a scenario A based on geostationary earth orbit (GEO) of TR38.821, the round trip time (RTT) reaches 541.46 milliseconds. In a scenario C based on low earth orbit (LEO), the RTT is 25.77 milliseconds when an orbital altitude of the LEO satellite is 600 kilometers.

### 2. HARQ refers to hybrid automatic repeat request.

The HARQ mechanism is one of the most important functions in NR. Combined with link adaptation, HARQ may achieve efficient, reliable and low-latency data transmission in cellular networks.

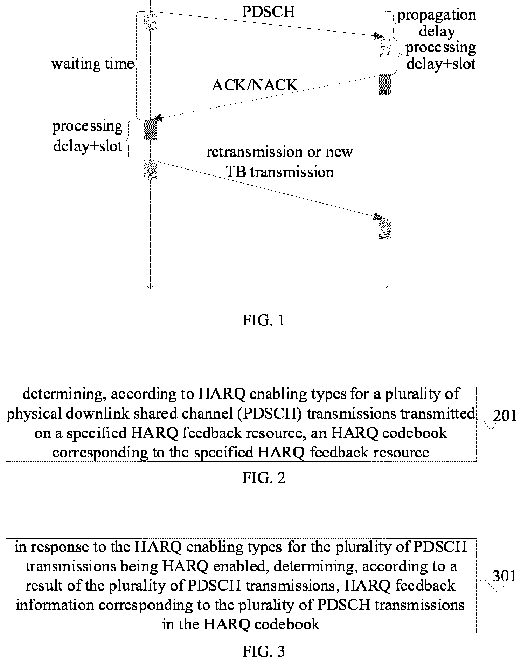

As shown in FIG. 1, an HARQ protocol is used. The transmitting end (i.e., a network device) needs to wait for feedback from a receiving end (i.e., a terminal device) before transmission of new data (PDSCH). If the feedback from the receiving end is negative acknowledgment (NACK), the transmitting end needs to retransmit data packet. Otherwise (i.e., the feedback from the receiving end is ACK), the transmitting end may transmit new data. Stop-And-Wait (SAW) process in the HARQ mechanism may reduce link throughput due to the HARQ RTT delay. In order to solve this problem, the HARQ mechanism supports a plurality of parallel HARQ process transmissions. That is, a transmitting end may initiate in parallel a plurality of PDSCH transmissions without waiting for HARQ to complete.

The slot in FIG. 1 refers to a time slot, and TB is a transport block.

Currently, whole information fed back by the terminal device on an HARQ feedback resource is called an HARQ codebook. In NR, a variety of HARQ codebook designs are supported, including a semi-static codebook and a dynamic codebook. The semi-static codebook refers to an HARQ codebook whose size does not dynamically change with an actual data scheduling situation, where the size of the HARQ codebook is predefined or preconfigured, that is, the size of the codebook fed back by the terminal device on each HARQ feedback resource is determined. The dynamic codebook means that the size of the HARQ codebook is dynamically determined based on the actual data scheduling situation.

The HARQ feedback resource refers to a time-frequency resource occupied by an HARQ information transmission.

In the related art, in a satellite communication scenario, in order to avoid a large delay caused by a propagation distance, the HARQ mechanism supports an HARQ process with HARQ disabled. That is to say, the network device may configure that some HARQ processes of the terminal device do not need to perform HARQ feedback. However, the current HARQ semi-static codebook is designed for an HARQ process in the HARQ mechanism that only supports HARQ enabled. For the HARQ process in the HARQ mechanism that supports HARQ disabled, that is, for a situation where the PDSCH that needs to be fed back by the terminal device on a certain HARQ feedback resource is configured to be HARQ disabled, it needs to clarify how the terminal device determines the feedback codebook.

In view of the above problems, the disclosure provides a method and an apparatus for determining an HARQ codebook, a method and an apparatus for receiving HARQ feedback information.

FIG. 2 is a flowchart of a method for determining an HARQ codebook according to an embodiment of the disclosure. The method for determining an HARQ codebook may be applied to a terminal device.

The terminal device may refer to a device that provides voice and/or data connectivity to a user, a handheld device with a wireless connection function, or other processing device connected to a wireless modem, etc. In different systems, the names of terminal device may also be different. For example, in a 5G system, the terminal device may be called user equipment (UE). The wireless terminal device may communicate with one or more core networks (CNs) via a radio access network (RAN), and the wireless terminal device may be a mobile terminal device, such as a mobile phone (or called a "Cellular" telephone) and a computer with mobile terminal devices, which may be, for example, portable, pocket-sized, handheld, computer-built-in or vehicle-mounted mobile devices, and exchange speech and/or data with the radio access network.

For example, the terminal device may be a personal communication service (PCS) phone, a cordless phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, or an access point, a remote terminal, an access terminal, a user terminal device, a user agent, a user device, which is not limited in the embodiments of the disclosure.

As shown in FIG. 2, the method for determining an HARQ codebook may include the following step.

At 201, an HARQ codebook corresponding to a specified HARQ feedback resource is determined according to HARQ enabling types for a plurality of PDSCH transmissions transmitted on the specified HARQ feedback resource.

In the embodiment of the disclosure, the specified HARQ feedback resource refers to a time-frequency resource used to transmit the HARQ feedback information. That is, what is transmitted on the HARQ feedback resource is the HARQ feedback information carried in the HARQ codebook. The HARQ feedback information may be HARQ feedbacks for one or more PDSCH transmissions.

It may be understood that, for the plurality of PDSCH transmissions, the HARQ feedback resource used to transmit HARQ feedback information may be determined according to a slot in which the PDSCH transmission is located, an indication of a scheduling instruction, etc.

In the embodiment of the disclosure, the HARQ enabling type may include at least one of: HARQ enabled or HARQ disabled.

It should be understood that the related art does not consider the HARQ enabling type and directly determines the HARQ codebook, which is hard to be suitable for the HARQ disabled situation. If the HARQ codebook determined in the above method is directly used to standardize feedback behaviors of the terminal device, an error may occur. However, in the embodiment of the disclosure, the terminal device determines the HARQ codebook corresponding to the HARQ feedback resource based on the HARQ enabling types for the plurality of PDSCH transmissions transmitted on the specified HARQ feedback resource, which may be suitable for the HARQ disabled scenario, and thus standardize HARQ feedback behaviors of the terminal device.

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

Embodiments of the disclosure provide another method for determining an HARQ codebook. FIG. 3 is a flowchart of another method for determining an HARQ codebook according to an embodiment of the disclosure. The method for determining an HARQ codebook may be applied to a terminal device. The method for determining an HARQ codebook may be executed alone, or in combination with any embodiment or possible implementation in the embodiment, or in combination with any technical solution in the related art.

As shown in FIG. 3, the method for determining an HARQ codebook may include the following step.

At 301, in response to the HARQ enabling types for the plurality of PDSCH transmissions being HARQ enabled, HARQ feedback information corresponding to the plurality of PDSCH transmissions in the HARQ codebook is determined according to a result for the plurality of PDSCH transmissions.

It should be noted that the explanation of HARQ feedback resource in the foregoing embodiment is also applicable to this embodiment, which may not be described again here.

In the embodiment of the disclosure, when the HARQ enabling types for the plurality of PDSCH transmissions transmitted on the specified HARQ feedback resource are all HARQ enabled, the terminal device may determine the HARQ feedback information corresponding to the plurality of PDSCH transmissions in the HARQ codebook corresponding to the HARQ feedback resource based on the result for the plurality of PDSCH transmissions.

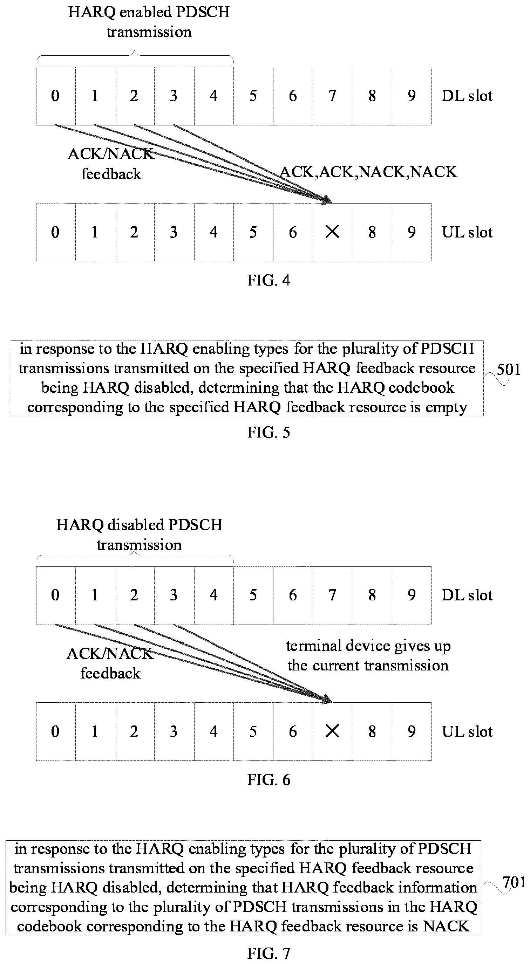

For example, referring to FIG. 4, the specified HARQ feedback resource is a certain uplink (UL) time-frequency resource (slot), such as UL slot 7 for example. Assuming that enabling types of PDSCH transmissions scheduled on the downlink (DL) slots 0, 1, 2, 3 by the network device are all HARQ enabled, assuming that the terminal device correctly receives the PDSCH transmissions scheduled on the DL slots 0 and 1 but fails to receive the PDSCH transmissions scheduled on the DL slots 2 and 3, the terminal device may determine that in the HARQ codebook corresponding to the HARQ feedback resource, HARQ feedback information corresponding to the PDSCH transmissions scheduled on the DL slots 0 and 1 is ACK information (that is, the HARQ feedback information corresponding to PDSCH transmissions scheduled on the DL slots 0 and 1 is ACK, ACK respectively), and HARQ feedback information corresponding to the PDSCH transmissions scheduled on the DL slots 2 and 3 is NACK information (that is, the HARQ feedback information corresponding to the PDSCH transmissions scheduled on the DL slots 2 and 3 is NACK, NACK respectively).

The network device takes a base station as an example. The base station may include a plurality of cells that provide services to the terminal device. Depending on the specific applications, each cell may contain a plurality of transmission reception point or transmit/receive point (TRPs), each of which may contain one or more antenna panels. Alternatively, the base station may be a device in the access network that communicates with wireless terminal devices through one or more sectors on a radio interface, or other names. For example, the base station involved in the embodiment of the disclosure may be a base transceiver station (BTS) in a global system for mobile communications (GSM) or code division multiple access (CDMA), or may be a base station (NodeB) in wide-band code division multiple access (WCDMA), or may be an evolutional Node B (referred to as eNB or e-NodeB) in a long term evolution (LTE) system, a 5G base station (referred to as gNB) in the 5G network architecture (next generation system), or a home evolved node B (HeNB), a relay node, a femto, a pico, etc., which is not limited in the embodiments of the disclosure.

That is to say, in this disclosure, when the HARQ processes included in the HARQ codebook at a moment to be fed back are all HARQ processes with HARQ enabled, for the HARQ feedback information that needs to be fed back on the HARQ feedback resource, the terminal device may determine HARQ feedback information corresponding to the plurality of PDSCH transmissions according to actual reception conditions for the plurality of PDSCH transmissions.

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario and thus standardize HARQ feedback behaviors of the terminal device.

It should be noted that the above possible implementations may be executed individually or in combination, which are not limited in the embodiment of the disclosure.

Embodiments of the disclosure provides another method for determining an HARQ codebook. FIG. 5 is a flowchart of another method for determining an HARQ codebook according to an embodiment of the disclosure. The method for determining an HARQ codebook may be applied to a terminal device. The method for determining an HARQ codebook may be executed alone, or in combination with any embodiment or possible implementation in the embodiment, or in combination with any technical solution in the related art.

As shown in FIG. 5, the method for determining an HARQ codebook may include the following step.

At 501, in response to the HARQ enabling types for the plurality of PDSCH transmissions transmitted on the specified HARQ feedback resource being all HARQ disabled, it is determined that the HARQ codebook corresponding to the HARQ feedback resource is empty.

It should be noted that the explanation of HARQ feedback resource in the foregoing embodiment is also applicable to this embodiment, which may not be described again here.

In the embodiment of the disclosure, when the HARQ enabling types for the plurality of PDSCH transmissions transmitted on the specified HARQ feedback resource are all HARQ disabled, the terminal device may determine the HARQ codebook corresponding to the HARQ feedback resource is empty, that is, the terminal device may give up HARQ feedbacks for the above the plurality of PDSCH transmissions.

As an example, when the HARQ processes included in the HARQ codebook at a moment to be fed back are all HARQ processes with HARQ disabled, for HARQ feedback information that needs to be fed back on the HARQ feedback resource this time, the terminal device may give up transmission of HARQ feedback resource this time. As shown in FIG. 6, taking the specified HARQ feedback resource as the UL slot 7 as an example, when the enabling types of PDSCH transmission scheduled on the DL slots 0, 1, 2, and 3 are HARQ disabled, the terminal device does not transmit HARQ feedback information on the UL slot 7 regardless of whether the terminal device correctly receives or fails to receive the PDSCH transmissions scheduled on the DL slots0, 1, 2, and 3.

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

It should be noted that the above possible implementations may be executed individually or in combination, which is not limited in the embodiment of the disclosure.

Embodiments of the disclosure provide another method for determining an HARQ codebook. FIG. 7 is a flowchart of another method for determining an HARQ codebook according to an embodiment of the disclosure. The method for determining an HARQ codebook may be applied to a terminal device. The method for determining an HARQ codebook may be executed alone, or in combination with any embodiment or possible implementation in the embodiment, or in combination with any technical solution in the related art.

As shown in FIG. 7, the method for determining the HARQ codebook may include the following step.

At 701, in response to the HARQ enabling types for the plurality of PDSCH transmissions transmitted on the specified HARQ feedback resource being HARQ disabled, it is determined that HARQ feedback information corresponding to the plurality of PDSCH transmissions in the HARQ codebook corresponding to the HARQ feedback resource is NACK information.

It should be noted that the explanation of HARQ feedback resource in the foregoing embodiment is also applicable to this embodiment, which may not be described again here.

In the embodiment of the disclosure, when the HARQ enabling types for the plurality of PDSCH transmissions transmitted on the specified HARQ feedback resource are all HARQ disabled, the terminal device may determine that the HARQ feedback information corresponding to the plurality of PDSCH transmissions is NACK information in the HARQ codebook corresponding to the HARQ feedback resource.

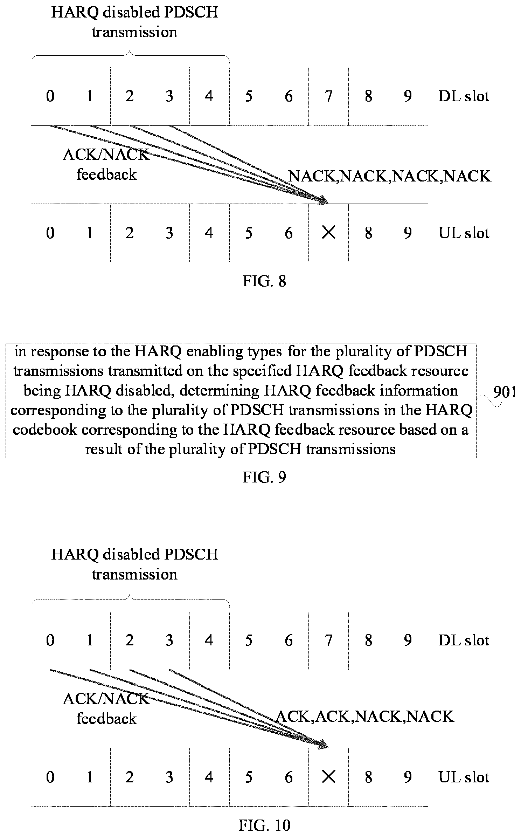

For example, referring to FIG. 8, the specified HARQ feedback resource is the UL slot 7 for illustration. Assuming that enabling types of PDSCH transmissions scheduled on the DL slots 0, 1, 2, and 3 are all HARQ disabled, assuming that the terminal device correctly receives the PDSCH transmission scheduled on the DL slots 0 and 1 but fails to receive the PDSCH transmissions scheduled on the DL slots 2 and 3, all the HARQ feedback information for the four PDSCH transmissions is NACK regardless of a data reception state of the terminal device since the HARQ enabling types for the plurality of PDSCH transmissions are HARQ disabled. That is, HARQ feedback information corresponding to the PDSCH transmissions scheduled on the DL slots 0, 1, 2, 3 is NACK, NACK, NACK, and NACK respectively.

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

It should be noted that the above possible implementations may be executed individually or in combination, which is not limited in the embodiment of the disclosure.

Embodiments of the disclosure provide another method for determining an HARQ codebook. FIG. 9 is a flowchart of another method for determining an HARQ codebook according to an embodiment of the disclosure. The method for determining an HARQ codebook may be applied to a terminal device. The method for determining an HARQ codebook may be executed alone, or in combination with any embodiment or possible implementation in the embodiment, or in combination with any technical solution in the related art.

As shown in FIG. 9, the method for determining the HARQ codebook may include the following step.

At 901, in response to the HARQ enabling types for the plurality of PDSCH transmissions transmitted on the specified HARQ feedback resource being HARQ disabled, HARQ feedback information corresponding to the plurality of PDSCH transmissions is determined in the HARQ codebook corresponding to the HARQ feedback resource based on a result for the plurality of PDSCH transmissions.

It should be noted that the explanation of HARQ feedback resource in the foregoing embodiment is also applicable to this embodiment, which may not be described again here.

In the embodiment of the disclosure, when the HARQ enabling types for the plurality of PDSCH transmissions transmitted on the specified HARQ feedback resource are all HARQ disabled, the terminal device may determine the HARQ feedback information corresponding to the plurality of PDSCH transmissions in the HARQ codebook corresponding to the HARQ feedback resource based on the result for the plurality of PDSCH transmissions.

For example, referring to FIG. 10, the specified HARQ feedback resource is the UL slot 7 for illustration. Assuming that enabling types of PDSCH transmissions scheduled on the DL slots 0, 1, 2, and 3 are all HARQ disabled, assuming that the terminal device correctly receives the PDSCH transmissions scheduled on the DL slots 0 and 1 but fails to receive the PDSCH transmissions scheduled on the DL slots 2 and 3, the terminal device may determine that in the HARQ codebook corresponding to the HARQ feedback resource, HARQ feedback information corresponding to the PDSCH transmissions scheduled on the DL slots 0 and 1 is ACK information (that is, the HARQ feedback information corresponding to the PDSCH transmission scheduled on the DL slots 0 and 1 is ACK and ACK respectively), and HARQ feedback information corresponding to the PDSCH transmissions scheduled on the DL slots 2 and 3 is NACK information (that is, the HARQ feedback information corresponding to the PDSCH transmissions scheduled on the DL slots 2 and 3 is NACK and NACK respectively).

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

It should be noted that the above possible implementations may be executed individually or in combination, which is not limited in the embodiment of the disclosure.

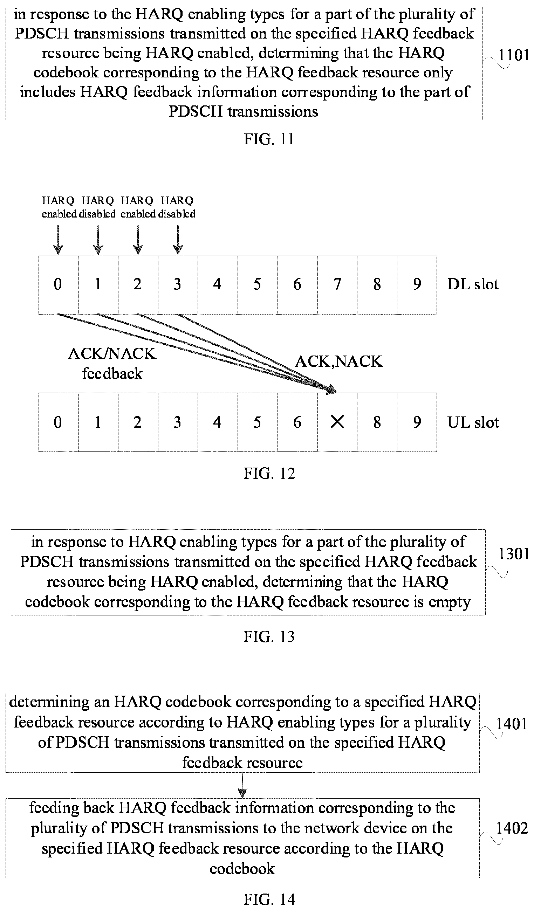

Embodiments of the disclosure provide another method for determining an HARQ codebook. FIG. 11 is a flowchart of another method for determining an HARQ codebook according to an embodiment of the disclosure. The method for determining an HARQ codebook may be applied to a terminal device. The method for determining an HARQ codebook may be executed alone, or in combination with any embodiment or possible implementation in the embodiment, or in combination with any technical solution in the related art.

As shown in FIG. 11, the method for determining an HARQ codebook may include the following step.

At 1101, in response to the HARQ enabling types for a part of the plurality of PDSCH transmissions transmitted on the specified HARQ feedback resource being HARQ enabled, it is determined that the HARQ codebook corresponding to the HARQ feedback resource only includes HARQ feedback information corresponding to the part of PDSCH transmissions.

It should be noted that the explanation of HARQ feedback resource in the foregoing embodiment is also applicable to this embodiment, which may not be described again here.

In the embodiment of the disclosure, when the HARQ enabling types for the part of the plurality of PDSCH transmissions transmitted on the specified HARQ feedback resource are HARQ enabled, the terminal device may determine that the HARQ codebook corresponding to the HARQ feedback resource only includes the HARQ feedback information corresponding to the part of PDSCH transmissions.

For example, referring to FIG. 12, the specified HARQ feedback resource is the UL slot 7 for illustration. Assuming that enabling types of PDSCH transmissions scheduled on the DL slots 0 and 2 are HARQ enabled, and enabling types of the PDSCH transmissions scheduled on the DL slots 1 and 3 are HARQ disabled, assuming that assuming that the terminal device correctly receives the PDSCH transmissions scheduled on the DL slots 0 and 1 but fails to receive the PDSCH transmissions scheduled on the DL slots 2 and 3, then the terminal device may determine that the HARQ codebook corresponding to the HARQ feedback resource only includes HARQ feedback information (ACK) corresponding to the PDSCH transmission scheduled on the DL slot 0, and HARQ feedback information (NACK) corresponding to the PDSCH transmission scheduled on the DL slot 2.

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device combines the HARQ enabling types for the plurality of PDSCH transmissions to determine the HARQ codebook corresponding to the HARQ feedback resource, which can be applied to scenarios where HARQ is not enabled and standardize the HARQ feedback behavior of the terminal device.

It should be noted that the above possible implementations may be executed individually or in combination, which is not limited in the embodiment of the disclosure.

Embodiments of the disclosure provide another method for determining an HARQ codebook. FIG. 13 is a flowchart of another method for determining an HARQ codebook according to an embodiment of the disclosure. The method for determining an HARQ codebook may be applied to a terminal device. The method for determining an HARQ codebook may be executed alone, or in combination with any embodiment or possible implementation in the embodiment, or in combination with any technical solution in the related art.

As shown in FIG. 13, the method for determining the HARQ codebook may include the following step.

At 1301, in response to HARQ enabling types for a part of the plurality of PDSCH transmissions transmitted on the specified HARQ feedback resource being HARQ enabled, it is determined that the HARQ codebook corresponding to the HARQ feedback resource is empty.

It should be noted that the explanation of HARQ feedback resource in the foregoing embodiment is also applicable to this embodiment, which may not be described again here.

In the embodiment of the disclosure, when the HARQ enabling types for the part of the plurality of PDSCH transmissions transmitted on the specified HARQ feedback resource are HARQ enabled, the terminal device may determine the HARQ codebook corresponding to the HARQ feedback resource is empty, that is, the terminal device does not need to feed back the HARQ feedback information to the network device.

In a possible implementation of the embodiment of the disclosure, after the terminal device determines that the HARQ codebook corresponding to the HARQ feedback resource is empty, the network device will not be able to receive the HARQ feedback information from the terminal device on the HARQ feedback resource, and the network device may send an HARQ feedback indication to the terminal device that instructs the terminal device to feed back feedback information including HARQ feedback information corresponding to the part of PDSCH transmissions. Correspondingly, after receiving the HARQ feedback indication from the network device, the terminal device may send the HARQ feedback information corresponding to the part of PDSCH transmissions to the network device.

For example, as shown in FIG. 12, the specified HARQ feedback resource is the UL slot 7 for illustration. Assuming that enabling types of PDSCH transmissions scheduled on the DL slots 0 and 2 are HARQ enabled, and enabling types of PDSCH transmissions scheduled on the DL slots 1 and 3 are HARQ disabled, assuming that the terminal device correctly receives the PDSCH transmissions scheduled on the DL slots 0 and 1 but fails to receive the PDSCH transmissions scheduled on the DL slots 2 and 3, there may be no need to feed back HARQ feedback information by the terminal device. After the network device cannot receive the HARQ feedback information from the terminal device on the HARQ feedback resource, it may send an HARQ feedback indication to the terminal device. Correspondingly, after the terminal device receives the HARQ feedback indication from the network device, it may send HARQ feedback information (ACK) corresponding to the PDSCH transmission scheduled on the DL slot 0 and HARQ feedback information (NACK) corresponding to the PDSCH transmission scheduled on the DL slot 2.

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

It should be noted that the above possible implementations may be executed individually or in combination, which is not limited in the embodiment of the disclosure.

Embodiments of the disclosure provide another method for determining an HARQ codebook. FIG. 14 is a flowchart of another method for determining an HARQ codebook according to an embodiment of the disclosure. The method for determining an HARQ codebook may be applied to a terminal device. The method for determining an HARQ codebook may be executed alone, or in combination with any embodiment or possible implementation in the embodiment, or in combination with any technical solution in the related art.

As shown in FIG. 14, the method for determining the HARQ codebook may include the following steps.

At 1401, an HARQ codebook corresponding to a specified HARQ feedback resource is determined according to HARQ enabling types for a plurality of PDSCH transmissions transmitted on the specified HARQ feedback resource.

In the embodiment of the disclosure, step 1401 may be implemented in any manner in various embodiments of the disclosure, which is not limited in the embodiment of the disclosure does not limit this and may not be described again.

At 1402, HARQ feedback information corresponding to the plurality of PDSCH transmissions is fed back to the network device on the specified HARQ feedback resource according to the HARQ codebook.

In this embodiment of the disclosure, after determining the HARQ codebook corresponding to the HARQ feedback resource, the terminal device may feed back the HARQ feedback information corresponding to the plurality of PDSCH transmissions to the network device on the specified HARQ feedback resource according to the HARQ codebook.

In a possible implementation of the embodiment of the disclosure, when the HARQ codebook is empty, the terminal device may give up a feedback of the HARQ feedback information corresponding to the plurality of PDSCH transmissions to the network device on the specified HARQ feedback resource.

In another possible implementation of the embodiment of the disclosure, when the HARQ codebook is non-empty, the terminal device may feed back the HARQ feedback information in the HARQ codebook to the network device on the specified HARQ feedback resource.

As an example, as shown in FIG. 12, the terminal device may feed backACK, NACK to the network device on the specified HARQ feedback resource. As shown in FIG. 10, the terminal device may feed back ACK, ACK, NACK and NACK to the network device on the specified HARQ feedback resource.

With the method for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

It should be noted that the above possible implementations may be executed individually or in combination, which is not limited in the embodiment of the disclosure.

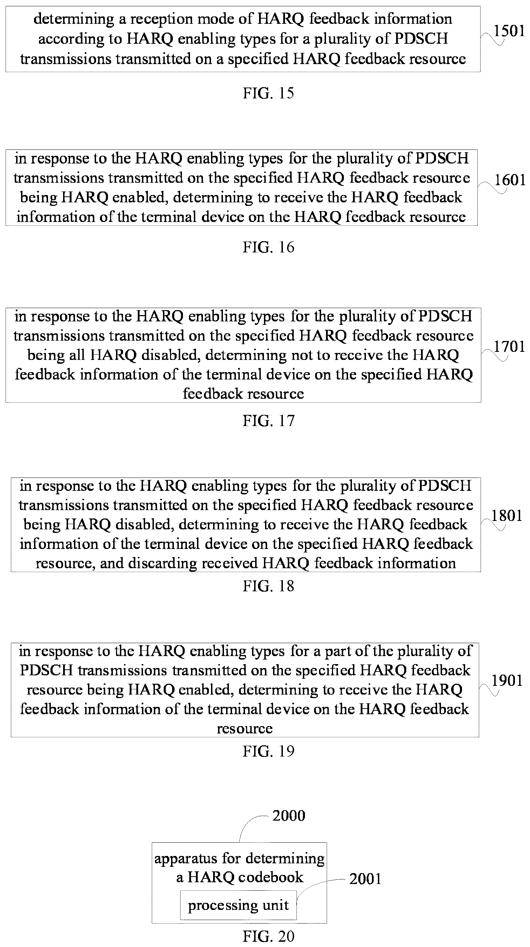

Embodiments of the disclosure provides a method for receiving HARQ feedback information. FIG. 15 is a flowchart of a method for receiving HARQ feedback information according to an embodiment of the disclosure. The method for receiving HARQ feedback information may be applied to a network device. The method for receiving HARQ feedback information may be executed alone, or in combination with any embodiment or possible implementation in the embodiment, or in combination with any technical solution in the related art.

As shown in FIG. 15, the method for receiving HARQ feedback information may include the following step.

At 1501, a reception mode of HARQ feedback information is determined according to HARQ enabling types for a plurality of PDSCH transmissions transmitted on a specified HARQ feedback resource.

It should be noted that the explanation of HARQ feedback resource and HARQ enabling types in the foregoing embodiments also applies to this embodiment, which may not be described again here.

In the embodiment of the disclosure, the network device may determine the reception method of HARQ feedback information according to the HARQ enabling types for the plurality of PDSCH transmissions transmitted on the specified HARQ feedback resource, that is, determine whether to receive the HARQ feedback resource from the terminal device on the HARQ feedback resource. HARQ feedback information. Therefore, the network device determines the reception mode of HARQ feedback information in combination with the HARQ enabling types for the plurality of PDSCH transmissions, which may ensure the reliability of data transmission.

With the method for receiving HARQ feedback information in the embodiment of the disclosure, the network device determines the reception mode of the HARQ feedback information according to the HARQ enabling types for the plurality of PDSCH transmissions transmitted on the specified HARQ feedback resource. Therefore, the network device determines the reception mode of HARQ feedback information in combination with the HARQ enabling types for the plurality of PDSCH transmissions, which may ensure the reliability of data transmission.

Embodiments of the disclosure provides another method for receiving HARQ feedback information. FIG. 16 is a flowchart of a method for receiving HARQ feedback information according to an embodiment of the disclosure. The method for receiving HARQ feedback information may be applied to a network device. The method for receiving HARQ feedback information may be executed alone, or in combination with any embodiment or possible implementation in the embodiment, or in combination with any technical solution in the related art.

As shown in FIG. 16, the method for receiving HARQ feedback information may include the following step.

At 1601, in response to the HARQ enabling types for the plurality of PDSCH transmissions transmitted on the specified HARQ feedback resource being all HARQ enabled, it is determined to receive the HARQ feedback information of the terminal device on the HARQ feedback resource.

It should be noted that the explanation of HARQ feedback resource in the foregoing embodiment is also applicable to this embodiment, which may not be described again here.

In the embodiment of the disclosure, when the HARQ enabling types for the plurality of PDSCH transmissions transmitted on the specified HARQ feedback resource are all HARQ enabled, the terminal device may determine HARQ feedback information corresponding to the plurality of PDSCH transmissions in the HARQ codebook corresponding to the HARQ feedback resource based on the result for the plurality of PDSCH transmissions. After determining the HARQ feedback information corresponding to the plurality of PDSCH transmissions, the terminal device may send the HARQ feedback information corresponding to the plurality of PDSCH transmissions to the network device on the specified HARQ feedback resource. In this way, in order to ensure the reliability of data transmission, the network device may determine to receive the HARQ feedback information of the terminal device on the specified HARQ feedback resource.

As an example, referring to FIG. 4, the HARQ feedback information sent by the terminal device to the network device on the specified HARQ feedback resource may be ACK, ACK, NACK, and NACK.

With the method for receiving HARQ feedback information in the embodiment of the disclosure, the network device determines the reception mode of the HARQ feedback information according to the HARQ enabling types for the plurality of PDSCH transmissions transmitted on the specified HARQ feedback resource. Therefore, the network device determines the reception method of HARQ feedback information in combination with the HARQ enabling types for the plurality of PDSCH transmissions, which can ensure the reliability of data transmission.

It should be noted that the above possible implementations may be executed individually or in combination, which is not limited in the embodiment of the disclosure.

Embodiments of the disclosure provides another method for receiving HARQ feedback information. FIG. 17 is a flowchart of a method for receiving HARQ feedback information according to an embodiment of the disclosure. The method for receiving HARQ feedback information may be applied to a network device. The method for receiving HARQ feedback information may be executed alone, or in combination with any embodiment or possible implementation in the embodiment, or in combination with any technical solution in the related art.

As shown in FIG. 17, the method for receiving HARQ feedback information may include the following step.

At 1701, in response to the HARQ enabling types for the plurality of PDSCH transmissions transmitted on the specified HARQ feedback resource being all HARQ disabled, it is determined not to receive the HARQ feedback information of the terminal device on the specified HARQ feedback resource.

It should be noted that the explanation of HARQ feedback resource in the foregoing embodiment is also applicable to this embodiment, which may not be described again here.

In a possible implementation of the embodiment of the disclosure, when the HARQ enabling types for the plurality of PDSCH transmissions transmitted on the specified HARQ feedback resource are all HARQ disabled, the terminal device may determine that the HARQ codebook corresponding to the HARQ feedback resource is empty, that is, the terminal device may give up HARQ feedback for the above plurality of PDSCH transmissions. In this way, in order to reduce the power consumption and processing burden of the network device, the network device does not need to receive HARQ feedback information from the terminal device, that is, the network device may determine not to receive HARQ feedback information from the terminal device on the HARQ feedback resource.

In another possible implementation of the embodiment of the disclosure, when the HARQ enabling types for the plurality of PDSCH transmissions transmitted on the specified HARQ feedback resource are all HARQ disabled, the terminal device may determine that the HARQ feedback information corresponding to the plurality of PDSCH transmissions in the HARQ codebook corresponding to the HARQ feedback resource is NACK information. In this way, in order to reduce the power consumption and processing burden of the network device, the network device does not need to receive HARQ feedback information from the terminal device, that is, the network device may determine not to receive the HARQ feedback information from the terminal device on the HARQ feedback resource.

In another possible implementation of the embodiment of the disclosure, when the HARQ enabling types for the plurality of PDSCH transmissions transmitted on the specified HARQ feedback resource are all HARQ disabled, the terminal device may determine HARQ feedback information corresponding to the plurality of PDSCH transmissions in the HARQ codebook corresponding to the HARQ feedback resource based on the result for the plurality of PDSCH transmissions. In this way, in order to reduce the power consumption and processing burden of the network device, the network device does not need to receive the HARQ feedback information from the terminal device, that is, the network device may determine not to receive the HARQ feedback information from the terminal device on the HARQ feedback resource.

With the method for receiving HARQ feedback information in the embodiment of the disclosure, the network device determines the reception mode of the HARQ feedback information according to the HARQ enabling types for the plurality of PDSCH transmissions transmitted on the specified HARQ feedback resource. Therefore, the network device determines the reception method of HARQ feedback information in combination with the HARQ enabling types for the plurality of PDSCH transmissions, which can ensure the reliability of data transmission.

It should be noted that the above possible implementations may be executed individually or in combination, which is not limited in the embodiment of the disclosure.

Embodiments of the disclosure provides another method for receiving HARQ feedback information. FIG. 18 is a flowchart of a method for receiving HARQ feedback information according to an embodiment of the disclosure. The method for receiving HARQ feedback information may be applied to a network device. The method for receiving HARQ feedback information may be executed alone, or in combination with any embodiment or possible implementation in the embodiment, or in combination with any technical solution in the related art.

As shown in FIG. 18, the method for receiving HARQ feedback information may include the following step.

At 1801, in response to the HARQ enabling types for the plurality of PDSCH transmissions transmitted on the specified HARQ feedback resource being all HARQ disabled, it is determined to receive the HARQ feedback information of the terminal device on the specified HARQ feedback resource, and received HARQ feedback information is discarded.

It should be noted that the explanation of HARQ feedback resource in the foregoing embodiment is also applicable to this embodiment, which may not be described again here.

In a possible implementation of the embodiment of the disclosure, when the HARQ enabling types for the plurality of PDSCH transmissions transmitted on the specified HARQ feedback resource are all HARQ disabled, the terminal device may determine that the HARQ feedback information corresponding to the plurality of PDSCH transmissions in the HARQ codebook corresponding to the HARQ feedback resource is NACK information. In this way, the network device may receive HARQ feedback information from the terminal device on the HARQ feedback resource, but discard the received HARQ feedback information.

In another possible implementation of the embodiment of the disclosure, when the HARQ enabling types for the plurality of PDSCH transmissions transmitted on the specified HARQ feedback resource are all HARQ disabled, the terminal device HARQ feedback information corresponding to the plurality of PDSCH transmissions in the HARQ codebook corresponding to the HARQ feedback resource may be determined based on the result for the plurality of PDSCH transmissions. In this way, the network device may receive HARQ feedback information from the terminal device on the HARQ feedback resource, but discard the received HARQ feedback information.

With the method for receiving HARQ feedback information in the embodiment of the disclosure, the network device determines the reception mode of the HARQ feedback information according to the HARQ enabling types for the plurality of PDSCH transmissions transmitted on the specified HARQ feedback resource. Therefore, the network device determines the reception mode of HARQ feedback information in combination with the HARQ enabling types for the plurality of PDSCH transmissions, which may ensure the reliability of data transmission.

It should be noted that the above possible implementations may be executed individually or in combination, which is not limited in the embodiment of the disclosure.

Embodiments of the disclosure provides another method for receiving HARQ feedback information. FIG. 19 is a flowchart of a method for receiving HARQ feedback information according to an embodiment of the disclosure. The method for receiving HARQ feedback information may be applied to a network device. The method for receiving HARQ feedback information may be executed alone, or in combination with any embodiment or possible implementation in the embodiment, or in combination with any technical solution in the related art.

As shown in FIG. 19, the method for receiving HARQ feedback information may include the following step,

At 1901, in response to the HARQ enabling types for a part of the plurality of PDSCH transmissions transmitted on the specified HARQ feedback resource being HARQ enabled, it is determined to receive the HARQ feedback information of the terminal device on the HARQ feedback resource.

It should be noted that the explanation of HARQ feedback resource in the foregoing embodiment is also applicable to this embodiment, which may not be described again here.

In the embodiment of the disclosure, when the HARQ enabling types for the part of the plurality of PDSCH transmissions transmitted on the specified HARQ feedback resource are HARQ enabled, the terminal device may determine the HARQ codebook corresponding to the HARQ feedback resource only includes HARQ feedback information corresponding to the part of PDSCH transmissions. In this way, in order for the network device to know the data reception state of the terminal device in a timely manner, the network device may receive the HARQ feedback information of the terminal device on the HARQ feedback resource, that is, the network device may determine to receive the HARQ feedback information of the terminal device on the HARQ feedback resource.

In a possible implementation of the embodiment of the disclosure, when the HARQ enabling types for the part of the plurality of PDSCH transmissions transmitted on the specified HARQ feedback resource are HARQ enabled, the terminal device may determine that the HARQ codebook corresponding to the HARQ feedback resource is empty, that is, the terminal device does not need to feed back the HARQ feedback information.

After the network device cannot receive the HARQ feedback information from the terminal device on the HARQ feedback resource, the network device may send an HARQ feedback indication to the terminal device that instructs the terminal device to feed back feedback information including HARQ feedback information corresponding to the part of PDSCH transmissions. Correspondingly, after receiving the HARQ feedback indication from the network device, the terminal device may send the HARQ feedback information corresponding to the part of PDSCH transmissions to the network device.

With the method for receiving HARQ feedback information in the embodiment of the disclosure, the network device determines the reception mode of the HARQ feedback information according to the HARQ enabling types for the plurality of PDSCH transmissions transmitted on the specified HARQ feedback resource. Therefore, the network device determines the reception mode of HARQ feedback information in combination with the HARQ enabling types for the plurality of PDSCH transmissions, which may ensure the reliability of data transmission.

It should be noted that the above possible implementations may be executed individually or in combination, which is not limited in the embodiment of the disclosure.

In an embodiment of the disclosure, the terminal device may determine a semi-static HARQ codebook in the following way.

First, when HARQ processes included in the HARQ codebook at a moment to be fed back are all HARQ enabled processes, the terminal device may report HARQ feedback information according to the design of Rel-15, that is, a size of HARQ codebook determined by the terminal device is predefined or preconfigured, and the terminal device may determine HARQ feedback information based on data demodulation results.

Second, when HARQ processes included in the HARQ codebook at a moment to be fed back are all HARQ disabled processes, there are three modes.

At mode 1, the terminal device gives up a feedback of current HARQ

When the terminal device determines that HARQ feedback information that needs to be fed back on a current HARQ feedback resource is all for HARQ disabled PDSCH transmissions, the terminal device may give up transmission of the current HARQ feedback resource.

Th network device does not need to receive the HARQ feedback information from the terminal device.

When the network device determines that HARQ feedback information scheduled or configured on a certain HARQ feedback resource is for HARQ disabled PDSCH transmissions, the network device will not receive HARQ feedback information from the terminal device on the HARQ feedback resource.

At mode 2, the terminal device feeds back preset HARQ feedback information

The terminal device feeds back the preset HARQ feedback information. For example, the terminal device may feed back NACK regardless of a decoding result of PDSCH transmissions. As shown in FIG. 8, it is assumed that the terminal device correctly receives all PDSCH transmissions scheduled on the DL slots 0 and 1, but fails to receive PDSCH transmissions scheduled on the DL slots 2 and 3. However, since the enabling types of these four PDSCH transmissions are all HARQ disabled, so the terminal device may ignore data reception situations and HARQ feedback information for these four PDSCH transmissions is all NACKs.

The network device does not need to receive HARQ feedback information from the terminal device, that is, the network device does not need to receive HARQ feedback messages on the HARQ feedback resource, or in another implementation, the network device may receive the HARQ feedback messages on the HARQ feedback resource but ignores indication contents carried in the HARQ feedback information.

At mode 3, the terminal device feeds back correct HARQ feedback information based on a decoding result.

The terminal device determines HARQ feedback information to be fed back based on the data reception situations. As shown in FIG. 10, it is assumed that the terminal device correctly receives all PDSCH transmissions scheduled on the DL slots 0 and 1, but fails to receive PDSCH transmissions scheduled on the DL slots 2 and 3, so the terminal device may determine pieces of HARQ feedback information for these four PDSCH transmissions are ACK, ACK, NACK, NACK respectively.

The network device does not need to receive HARQ feedback information from the terminal device, that is, the network device does not need to receive the HARQ feedback messages on the HARQ feedback resource, or in another implementation, the network device may receive the HARQ feedback messages on the HARQ feedback resource but ignores indication contents carried in the HARQ feedback information.

Third, when a part of HARQ processes contained in the HARQ codebook at a moment to be fed back are HARQ enabled processes and a part of HARQ processes are HARQ disabled processes, there are two modes.

At mode 1, the terminal device may determine a size of HARQ codebook based on a number of HARQ-enabled HARQ processes in the HARQ processes to be fed back, the size of HARQ codebook is generated in a predefined order, and HARQ feedback information is fed back based on the decoding result. As shown in FIG. 12, for a certain terminal device, it is assumed that HARQ-enabled PDSCH transmissions are scheduled on the DL slots 0 and 2, and HARQ-disabled PDSCH transmissions are scheduled on the DL slots 1 and 3, and it is also assumed that the terminal device correctly receives PDSCH transmissions scheduled on the DL slots 0 and 1, but fails to receive PDSCH transmissions scheduled on the DL slots 2 and 3. Therefore, the HARQ codebook fed back by the terminal device carries HARQ feedback information for two PDSCH transmissions, which are HARQ feedback information corresponding to PDSCH transmissions scheduled on the DL slots 0 and 2 respectively. Based on the reception results of the terminal device, it may be determined that the HARQ feedback information corresponding to the PDSCH transmission scheduled on the DL slots 0 and 2 is ACK and NACK respectively.

The network device receives HARQ feedback information from the terminal device.

The network device may receive the HARQ feedback information on a predefined or indicated HARQ feedback resource and obtain a data reception state of the terminal device.

At mode 2, the terminal device considers there is an error case and does not feed back any HARQ feedback information. The terminal device transmits HARQ feedback information that needs to be fed back based on a subsequent indication from the network device.

The network device triggers retransmission of the HARQ feedback information for an HARQ-enabled process that has not been fed back.

As such, a method for designing an HARQ semi-static codebook is proposed, which may standardize HARQ feedback behaviors of the terminal device and ensure the reliability of data transmission.

Corresponding to the method for determining an HARQ codebook according to the embodiments of FIG. 2 to FIG. 14, the disclosure also provides an apparatus for determining an HARQ codebook. As the apparatus for determining an HARQ codebook according to the embodiment of the disclosure corresponds to the method for determining an HARQ codebook according to the embodiments of FIG. 2 to FIG. 14, implementations of the method for determining an HARQ codebook are also applicable to the apparatus for determining an HARQ codebook according to the embodiment of the disclosure, which are not described again in detail.

FIG. 20 is a structural diagram of an apparatus for determining an HARQ codebook according to an embodiment of the disclosure. The apparatus may be applied to a terminal device.

As shown in FIG. 20, the apparatus 2000 for determining an HARQ codebook may include a processing unit 2001.

The processing unit 2001 is configured to determine determining, according to an HARQ enabling type for a plurality of PDSCH transmissions transmitted on a specified HARQ feedback resource, an HARQ codebook corresponding to the specified HARQ feedback resource.

Optionally, the processing unit 2001 is specifically configured to, in response to the HARQ enabling types for the plurality of PDSCH transmissions being HARQ enabled, determine, according to a result for the plurality of PDSCH transmissions, HARQ feedback information corresponding to the plurality of PDSCH transmissions in the HARQ codebook.

Optionally, the processing unit 2001 is specifically configured to in response to the HARQ enabling types for the plurality of PDSCH transmissions being HARQ disabled, determine that the HARQ codebook is empty; in response to the HARQ enabling types for the plurality of PDSCH transmissions being HARQ disabled, determine that HARQ feedback information corresponding to the plurality of PDSCH transmissions in the HARQ codebook is NACK information; or in response to the HARQ enabling types for the plurality of PDSCH transmissions being HARQ disabled, determine, according to a result for the plurality of PDSCH transmissions, HARQ feedback information corresponding to the plurality of PDSCH transmissions in the HARQ codebook.

Optionally, the processing unit 2001 is specifically configured to, in response to HARQ enabling types for a part of the plurality of PDSCH transmissions being HARQ enabled, determine that the HARQ codebook only includes HARQ feedback information corresponding to the part of PDSCH transmissions.

Optionally, the processing unit 2001 is specifically configured to in response to HARQ enabling types for a part of the plurality of PDSCH transmissions being HARQ enabled, determine that the HARQ codebook is empty.

Optionally, the processing unit 2001 is specifically configured to, in response to receiving an HARQ feedback indication from a network device, determine to send HARQ feedback information corresponding to the part of PDSCH transmissions to the network device.

Optionally, the apparatus 2000 for determining an HARQ codebook may also include: a transceiver unit, configured to feed back HARQ feedback information corresponding to the plurality of PDSCH transmissions to the network device on the specified HARQ feedback resource according to the HARQ codebook.

Optionally, the transceiver unit is specifically configured to, in response to the HARQ codebook being empty, give up a feedback of the HARQ feedback information to the network device on the specified HARQ feedback resource; or in response to the HARQ codebook being non-empty, feed back the HARQ feedback information in the HARQ codebook to the network device on the specified HARQ feedback resource.

With the apparatus for determining an HARQ codebook in the embodiment of the disclosure, the terminal device determines the HARQ codebook corresponding to the HARQ feedback resource according to the HARQ enabling types for the plurality of PDSCH transmissions transmitted on the specified HARQ feedback resource. Therefore, the terminal device determines the HARQ codebook corresponding to the HARQ feedback resource in combination with the HARQ enabling types for the plurality of PDSCH transmissions, which may be suitable for the HARQ disabled scenario, and thus standardize HARQ feedback behaviors of the terminal device.

Corresponding to the method for receiving HARQ feedback information according to the above-mentioned embodiments of FIG. 15 to FIG. 19, the disclosure also provides an apparatus for receiving HARQ feedback information. As the apparatus for receiving HARQ feedback information according to the embodiment of the disclosure corresponds to the method for receiving HARQ feedback information according to the embodiments of FIG. 15 to FIG. 19, implementations of the method for receiving HARQ feedback information are also applicable to the apparatus for receiving HARQ feedback information according to the embodiment of the disclosure, which are not described again in detail.

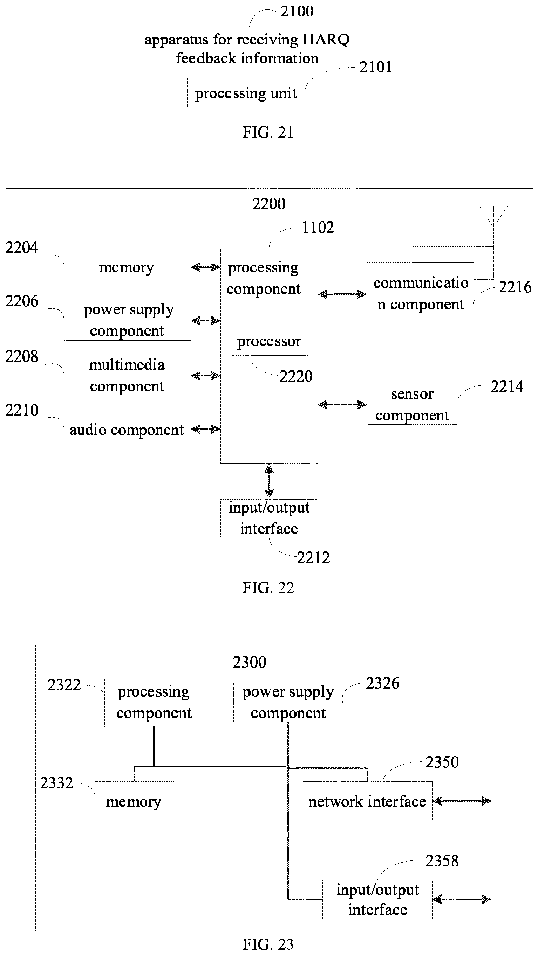

FIG. 21 is a structural diagram of an apparatus for receiving HARQ feedback information according to an embodiment of the disclosure. The apparatus may be applied to a network device.

As shown in FIG. 21, the apparatus 2100 for receiving HARQ feedback information may include a processing unit 2101.

The processing unit 2101 is configured to determine, according to HARQ enabling types for a plurality of PDSCH transmissions transmitted on a specified HARQ feedback resource, a reception mode of HARQ feedback information.

Optionally, the processing unit 2101 is specifically configured to, in response to the HARQ enabling types for the plurality of PDSCH transmissions being HARQ enabled, determine to receive HARQ feedback information on the HARQ feedback resources.

Optionally, the processing unit 2101 is specifically configured to: in response to the HARQ enabling types for the plurality of PDSCH transmissions being HARQ disabled, determine not to receive the HARQ feedback information on the specified HARQ feedback resource; or in response to the HARQ enabling types for the plurality of PDSCH transmissions being HARQ disabled, determine to receive the HARQ feedback information on the specified HARQ feedback resource and to discard received HARQ feedback information.

Optionally, the processing unit 2101 is specifically configured to: in response to HARQ enabling types for a part of the plurality of PDSCH transmissions being HARQ enabled, determining to receive the HARQ feedback information on the specified HARQ feedback resource.

Optionally, the apparatus 2100 for receiving HARQ feedback information may also include: a transceiver unit, configured to in response to failing to receive the HARQ feedback information of a terminal device on the specified HARQ feedback resource, send an HARQ feedback indication to the terminal device to indicate the terminal device to feed back HARQ feedback information corresponding to the part of PDSCH transmissions.

With the apparatus for receiving HARQ feedback information in the embodiment of the disclosure, the network device determines the reception mode of the HARQ feedback information according to the HARQ enabling types for the plurality of PDSCH transmissions transmitted on the specified HARQ feedback resource. Therefore, the network device determines the reception method of HARQ feedback information in combination with the HARQ enabling types for the plurality of PDSCH transmissions, which may ensure the reliability of data transmission.

In order to implement the above embodiments, the disclosure also proposes a device for determining an HARQ codebook.

The device for determining an HARQ codebook according to the embodiment of the disclosure includes a processor, a transceiver, a memory, and an executable program stored in the memory and capable of being run by the processor. When the processor runs the executable program, the foregoing method is carried out according to any one of the methods in FIG. 2 to FIG. 14.

The device for determining an HARQ codebook may be the aforementioned terminal device.

In order to implement the above embodiments, the disclosure also proposes a device for receiving HARQ feedback information.

The device for receiving HARQ feedback information according to the embodiment of the disclosure includes a processor, a transceiver, a memory, and an executable program stored in the memory and capable of being run by the processor. When the processor runs the executable program, the foregoing method is carried out according to any one of the methods in FIG. 15 to FIG. 19.

The device for receiving HARQ feedback information may be the aforementioned network device.

The processor may include various types of storage media, which are non-transitory computer storage media that may continue to memorize information stored on the communication device after the communication device is powered off. Here, the communication device may include a terminal device or a network device.

The processor may be connected to the memory through a bus or the like, and be used to read the executable program stored in the memory, for example, according to at least one of FIG. 2 to FIG. 19.

In order to implement the above embodiments, the disclosure also proposes a computer storage medium.

The computer storage medium according to the embodiment of the disclosure has an executable program stored. When the executable program is executed by the processor, the foregoing method of may be implemented, for example, according to any of the aforementioned embodiments as shown in at least one of FIG. 2 to FIG. 19.

FIG. 22 is a block diagram of a terminal device 2200 according to an embodiment of the disclosure. For example, the terminal device 2200 may be a mobile phone, a computer, a digital broadcast user device, a messaging device, a gaming console, a tablet device, a medical device, a fitness device, a personal digital assistant, or the like.

Referring to FIG. 22, the terminal device 2200 may include at least one of the following components: a processing component 2202, a memory 2204, a power supply component 2206, a multimedia component 2208, an audio component 2210, an input/output (I/O) interface 2212, a sensor component 2214, and a communication component 2216.

The processing component 2202 generally controls overall operations of the terminal device 2200, such as operations associated with display, phone calls, data communications, camera operations, and recording operations. The processing component 2202 may include at least one processor 2220 to execute instructions to complete all or part of the steps of the above methods. Additionally, the processing component 2202 may include at least one module that facilitates interactions between the processing component 2202 and other components. For example, the processing component 2202 may include a multimedia module to facilitate interactions between the multimedia component 2208 and the processing component 2202.

The memory 2204 is configured to store various types of data to support operations at the terminal device 2200. Examples of such data include instructions for any application or method operating on the terminal device 2200, contact data, phonebook data, messages, pictures, videos, etc. The memory 2204 may be implemented by any type of volatile or non-volatile storage device, or their combination, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power supply component 2206 provides powers to various components of the terminal device 2200. The power supply components 2206 may include a power management system, at least one power supply, and other components associated with generating, managing, and distributing power to the terminal device 2200.

The multimedia component 2208 includes a screen that provides an output interface between the terminal device 2200 and the user. In some embodiments, the screen may include a liquid crystal display (LCD) and a touch panel (TP). If the screen includes a touch panel, the screen may be implemented as a touch screen to receive input signals from the user. The touch panel includes at least one touch sensor to sense touches, slides, and gestures on the touch panel. The touch sensor may not only sense a boundary of the touch or sliding operation, but also detect a wake-up time and pressure related to the touch or sliding operation. In some embodiments, the multimedia component 2208 includes a front-facing camera and/or a rear-facing camera. When the terminal device 2200 is in an operating mode, such as a shooting mode or a video mode, the front camera and/or the rear camera may receive external multimedia data. Each of the front camera and rear camera may be a fixed optical lens system or have a focal length and optical zoom capabilities.

The audio component 2210 is configured to output and/or input audio signals. For example, the audio component 2210 includes a microphone (MIC) configured to receive external audio signals when the terminal device 2200 is in operating modes, such as a call mode, a recording mode, and a voice recognition mode. The received audio signals may be further stored in the memory 2204 or sent via the communications component 2216. In some embodiments, the audio component 2210 also includes a speaker for outputting audio signals.

The I/O interface 2212 provides an interface between the processing component 2202 and a peripheral interface module. The peripheral interface module may be a keyboard, a click wheel, a button, etc. These buttons may include, but are not limited to: a home button, volume buttons, a start button, and a lock button.

The sensor component 2214 includes at least one sensor for providing various aspects of status assessment for the terminal device 2200. For example, the sensor component 2214 may detect an open/closed state of the terminal device 2200 and a relative positioning of components, such as the display and keypad of the terminal device 2200. The sensor component 2214 may also detect changes in position of the terminal device 2200 or components of the terminal device 2200, a presence or absence of user contact with the terminal device 2200, an orientation or acceleration/deceleration of the terminal device 2200 and temperature changes of the terminal device 2200. The sensor component 2214 may include a proximity sensor configured to detect the presence of nearby objects without any physical contact. The sensor component 2214 may also include a light sensor, such as a CMOS or CCD image sensor, for use in imaging applications. In some embodiments, the sensor component 2214 may also include an acceleration sensor, a gyroscope sensor, a magnetic sensor, a pressure sensor, or a temperature sensor.

The communication component 2216 is configured to facilitate wired or wireless communications between the terminal device 2200 and other devices. The terminal device 2200 may access a wireless network based on a communication standard, such as WiFi, 2G or 3G, or their combination. In an exemplary embodiment, the communication component 2216 receives broadcast signals or broadcast related information from an external broadcast management system via a broadcast channel. In an exemplary embodiment, the communication component 2216 also includes a near field communications (NFC) module to facilitate short-range communications. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the terminal device 2200 may be implemented by at least one application specific integrated circuit (ASIC), digital signal processor (DSP), digital signal processing device (DSPD), programmable logic device (PLD), field programmable gate array (FPGA), controller, microcontroller, microprocessor or other electronic components to execute the above-mentioned method as shown in any one of FIG. 2 to FIG. 14.

In an exemplary embodiment, a non-transitory computer-readable storage medium including instructions is also provided, such as the memory 2204 including instructions, which may be executed by the processor 2220 of the terminal device 2200 to complete the above-mentioned method as shown in any one of FIG. 2 to FIG. 14. For example, the non-transitory computer-readable storage medium may be a ROM, a random access memory (RAM), a CD-ROM, a magnetic tape, a floppy disk, an optical data storage device, etc.

As shown in FIG. 23, it is a structural schematic diagram of a network device according to an embodiment of the disclosure. The network device 2300 includes a processing component 2322, which further includes at least one processor, and a memory resource represented by a memory 2332 for storing instructions, such as application programs, that can be executed by the processing component 2322. The application program stored in the memory 2332 may include one or more modules, each corresponding to a set of instructions. In addition, the processing component 2322 is configured to execute instructions to perform any of the above-mentioned methods applied to the network device, for example, the method as shown in any of FIG. 15 to FIG. 19.

The network device 2300 may also include a power supply component 2326 configured to perform power management of the network device 2300, a wired or wireless network interface 2350 configured to connect the network device 2300to the network, and an input/output (I/O) interface 2358. The network device 2300 may operate based on an operating system stored in the memory 2332, such as Windows Server^{™}, Mac OS X^{™}, Unix^{™}, Linux^{™}, FreeBSD^{™} or the like.

Other embodiments of the disclosure may be readily apparent to those skilled in the art from consideration of the specification and practice of the invention disclosed herein. The disclosure is intended to cover any variations, uses, or adaptations of the invention that follow the general principles of the invention and include common knowledge or conventional technical means in the technical field that are not disclosed in the invention. The specification and examples are only considered as exemplary, with a true scope and spirit of the disclosure being indicated by the following claims.

It should be understood that the disclosure is not limited to the precise structures described above and illustrated in the accompanying drawings, and various modifications and changes may be made without departing from the scope of the disclosure. The scope of the disclosure is limited only by the appended claims.

In order to achieve the above embodiments, the embodiments of the disclosure also provide a communication device. The communication device may be a network device, a terminal device, or a chip/chip system/ processor that supports the network device to implement the above method, or a chip/chip system/ processor that supports the terminal device to implement the above method. The device may be used to implement the method described in any of the above method embodiments. For details, please refer to the description in the above method embodiments.

The communication device may include one or more processors. The processor may be a general-purpose processor or a special-purpose processor, etc. For example, it may be a baseband processor or a central processing unit. The baseband processor may be used to process communication protocols and communication data. The central processing unit may be used to control the communication device (such as a base station, a baseband chip, a terminal device, a terminal device chip, a DU or a CU, etc.) and execute computer programs, processing data of the computer programs.

Optionally, the communication device may also include one or more memories, on which a computer program may be stored. When the computer program is executed by the processor, so that the communication device is caused to carry out the method described in the above method embodiments. Optionally, data may also be stored in the memory. The communication device and the memory may be provided separately or integrated together.

Optionally, the communication device may also include a transceiver and an antenna. The transceiver may be called a transceiver unit, a transceiver, or a transceiver circuit, etc., and is used to implement transceiving functions. The transceiver may include a receiver and a transmitter. The receiver may be called a receiving machine or a receiving circuit, etc., and is used to implement the receiving function. The transmitter may be called a transmitting machine or a transmitting circuit, etc., and is used to implement the transmitting function.

Optionally, the communication device may also include one or more interface circuits. The interface circuit is used to receive code instructions and transmit them to the processor. The code instructions are executed by the processor, so that the communication device is caused to carry out the method described in any of the above method embodiments.

In an implementation, a transceiver for implementing receiving and transmitting functions may be included in the processor. For example, the transceiver may be a transceiver circuit, an interface, or an interface circuit. The transceiver circuit, interface or interface circuit used to implement the receiving and transmitting functions may be separate or integrated together. The above-mentioned transceiver circuit, interface or interface circuit may be used for reading and writing codes/data. Alternatively, the above-mentioned transceiver circuit, interface or interface circuit may be used for signal transmission or transfer.

In an implementation, the processor may store a computer program, and the computer program runs on the processor, causing the communication device to carry out the method described in any of the above method embodiments. The computer program may be embedded in the processor, in which case the processor may be implemented in hardware.

In an implementation, the communication device may include a circuit, and the circuit may implement transmitting or receiving or communicating functions in the foregoing method embodiments. The processor and transceiver described in this disclosure may be implemented in an integrated circuit (IC), an analog IC, a radio frequency integrated circuit (RFIC), a mixed signal IC, an application specific integrated circuit (ASIC), a printed circuit board (PCB), electronic equipment, etc. The processor and transceiver may also be manufactured using various IC process technologies, such as a complementary metal oxide semiconductor (CMOS), a nMetal-Oxide-Semiconductor (NMOS), a Positive Channel Metal Oxide Semiconductor (PMOS), a bipolar junction transistor (BJT), a bipolar CMOS (BiCMOS), silicon germanium (SiGe), gallium arsenide (GaAs), etc.

The communication device described in the above embodiments may be a network device or a terminal device, but the scope of the communication device described in the disclosure is not limited. The communication device may be a stand-alone device or may be part of a larger device. For example, the communication device may be:
(1) an independent integrated circuit IC, or a chip, or a chip system or a subsystem;
(2) a collection of one or more ICs. Optionally, the IC collection may also include storage components for storing data and computer programs;
(3) ASIC, such as modem;
(4) modules that can be embedded in other devices;
(5) a receiver, a terminal device, an intelligent terminal device, a cellular phone, a wireless device, a handheld device, a mobile unit, a vehicle-mounted device, a network device, a cloud device, an artificial intelligence device, etc.;
(6) Others, etc.

The communication device may be a chip or a system on a chip, the chip may include a processor and an interface. The number of processors may be one or more, and the number of interfaces may be multiple.

Optionally, the chip also includes a memory, which is used to store necessary computer programs and data.

Those skilled in the art may also understand that the various illustrative logical blocks and steps listed in the embodiments of the disclosure may be implemented by electronic hardware, computer software, or their combination. Whether such functionality is implemented in hardware or software depends on a specific application and overall system design requirements. Those skilled in the art may use various methods to implement the described functions for each specific application, but such implementation should not be understood as going beyond the protection scope of the embodiments of the disclosure.

The disclosure also provides a readable storage medium on which instructions are stored, and when the instructions are executed by a computer, the functions of any one of the above method embodiments are implemented.

The disclosure also provides a computer program product, which implements the functions of any one of the above method embodiments when executed by a computer.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one computer-readable storage medium to another. For example, the computer program may be transferred from a website, a computer, a server, or a data center to another website, another computer, another server or another data center through a wired means (such as a coaxial cable, an optical fiber, a digital subscriber line (DSL)) or a wireless means (such as infrared, wireless, microwave, etc.). The computer-readable storage medium may be any available medium that can be accessed by a computer or a data storage device such as a server, a data center, etc. that contains one or more available media integrated. The available media may be magnetic media (e.g., a floppy disk, a hard disk, a tape), optical media (e.g., a digital video disc (DVD)), or semiconductor media (e.g., a solid state disk (SSD)) etc.

Those skilled in the art may understand that the first, second, and other numerical numbers involved in the disclosure are only for convenience of description and are not used to limit the scope of the embodiments of the disclosure and also indicate the order.

The term "at least one" in the disclosure can also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. When configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the communication device, and the values or expressions of the parameters may also be other values or expressions that may be understood by the communication device. When implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, pre-storage, pre-negotiation, pre-configuration, solidification, or pre-burning.

Those skilled in the art may be aware that the units and algorithm steps of each example described in conjunction with the embodiments disclosed herein can be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and simplicity of description, the specific working processes of the systems, devices and units described above may be referred to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

## Claims

1. A method for determining a hybrid automatic repeat request (HARQ) codebook, applied to a terminal device, the method comprising:
determining, according to HARQ enabling types for a plurality of physical downlink shared channel (PDSCH) transmissions transmitted on a specified HARQ feedback resource, an HARQ codebook corresponding to the specified HARQ feedback resource.

2. The method according to claim 1, wherein determining, according to the HARQ enabling types for the plurality of PDSCH transmissions transmitted on the specified HARQ feedback resource, the HARQ codebook corresponding to the specified HARQ feedback resource comprises:
in response to the HARQ enabling types for the plurality of PDSCH transmissions being HARQ enabled, determining, according to a result for the plurality of PDSCH transmissions, HARQ feedback information corresponding to the plurality of PDSCH transmissions in the HARQ codebook.

3. The method according to claim 1, wherein determining, according to the HARQ enabling types for the plurality of PDSCH transmissions transmitted on the specified HARQ feedback resource, the HARQ codebook corresponding to the specified HARQ feedback resource comprises:
in response to the HARQ enabling types for the plurality of PDSCH transmissions being HARQ disabled, determining that the HARQ codebook is empty;
in response to the HARQ enabling types for the plurality of PDSCH transmissions being HARQ disabled, determining that HARQ feedback information corresponding to the plurality of PDSCH transmissions in the HARQ codebook is non- acknowledgement (NACK) information; or
in response to the HARQ enabling types for the plurality of PDSCH transmissions being HARQ disabled, determining, according to a result for the plurality of PDSCH transmissions, HARQ feedback information corresponding to the plurality of PDSCH transmissions in the HARQ codebook.

4. The method according to claim 1, wherein determining, according to the HARQ enabling types for the plurality of PDSCH transmissions transmitted on the specified HARQ feedback resource, the HARQ codebook corresponding to the specified HARQ feedback resource comprises:
in response to HARQ enabling types for a part of the plurality of PDSCH transmissions being HARQ enabled, determining that the HARQ codebook only comprises HARQ feedback information corresponding to the part of PDSCH transmissions.

5. The method according to claim 1, wherein determining, according to the HARQ enabling types for the plurality of PDSCH transmissions transmitted on the specified HARQ feedback resource, the HARQ codebook corresponding to the specified HARQ feedback resource comprises:
in response to HARQ enabling types for a part of the plurality of PDSCH transmissions being HARQ enabled, determining that the HARQ codebook is empty.

6. The method according to claim 5, after determining that the HARQ codebook is empty, the method further comprises:
in response to receiving an HARQ feedback indication from a network device, determining to send HARQ feedback information corresponding to the part of PDSCH transmissions to the network device.

7. The method according to any one of claim 1 to 6, further comprising:
feeding back HARQ feedback information corresponding to the plurality of PDSCH transmissions to the network device on the specified HARQ feedback resource according to the HARQ codebook.

8. The method according to claim 7, wherein feeding back HARQ feedback information corresponding to the plurality of PDSCH transmissions to the network device on the specified HARQ feedback resource according to the HARQ codebook comprises:
in response to the HARQ codebook being empty, giving up a feedback of the HARQ feedback information to the network device on the specified HARQ feedback resource; or
in response to the HARQ codebook being non-empty, feeding back the HARQ feedback information in the HARQ codebook to the network device on the specified HARQ feedback resource.

9. A method for receiving HARQ feedback information, applied to a network device, the method comprising:
determining, according to HARQ enabling types for a plurality of physical downlink shared channel (PDSCH) transmissions transmitted on a specified HARQ feedback resource, a reception mode of HARQ feedback information.

10. The method according to claim 9, wherein determining, according to HARQ enabling types for the plurality of PDSCH transmissions transmitted on the specified HARQ feedback resource, the reception mode of HARQ feedback information comprises:
in response to the HARQ enabling types for the plurality of PDSCH transmissions being HARQ enabled, determining to receive the HARQ feedback information on the specified HARQ feedback resource.

11. The method according to claim 9, wherein determining, according to HARQ enabling types for the plurality of PDSCH transmissions transmitted on the specified HARQ feedback resource, the reception mode of HARQ feedback information comprises:
in response to the HARQ enabling types for the plurality of PDSCH transmissions being HARQ disabled, determining not to receive the HARQ feedback information on the specified HARQ feedback resource; or
in response to the HARQ enabling types for the plurality of PDSCH transmissions being HARQ disabled, determining to receive the HARQ feedback information on the specified HARQ feedback resource and to discard received HARQ feedback information.

12. The method according to claim 9, wherein determining, according to HARQ enabling types for the plurality of PDSCH transmissions transmitted on the specified HARQ feedback resource, the reception mode of HARQ feedback information comprises:
in response to HARQ enabling types for a part of the plurality of PDSCH transmissions being HARQ enabled, determining to receive the HARQ feedback information on the specified HARQ feedback resource.

13. The method according to claim 12, further comprising:
in response to failing to receive the HARQ feedback information of a terminal device on the specified HARQ feedback resource, sending an HARQ feedback indication to the terminal device to indicate the terminal device to feed back HARQ feedback information corresponding to the part of PDSCH transmissions.

14. An apparatus for determining an HARQ codebook, applied to a terminal device, the apparatus comprising:
a processing unit, configured to determine, according to HARQ enabling types for a plurality of physical downlink shared channel (PDSCH) transmissions on a specified HARQ feedback resource, an HARQ codebook corresponding to the specified HARQ feedback resource.

15. The apparatus according to claim 14, wherein the processing unit is specifically configured to:
in response to the HARQ enabling types for the plurality of PDSCH transmissions being HARQ enabled, determine, according to a result for the plurality of PDSCH transmissions, HARQ feedback information corresponding to the plurality of PDSCH transmissions in the HARQ codebook.

16. The apparatus according to claim 14, wherein the processing unit is specifically configured to:
in response to the HARQ enabling types for the plurality of PDSCH transmissions being HARQ disabled, determine that the HARQ codebook is empty;
in response to the HARQ enabling types for the plurality of PDSCH transmissions being HARQ disabled, determine that HARQ feedback information corresponding to the plurality of PDSCH transmissions in the HARQ codebook is non-acknowledgement (NACK) information; or
in response to the HARQ enabling types for the plurality of PDSCH transmissions being HARQ disabled, determine, according to a result for the plurality of PDSCH transmissions, HARQ feedback information corresponding to the plurality of PDSCH transmissions in the HARQ codebook.

17. The apparatus according to claim 14, wherein the processing unit is specifically configured to:
in response to HARQ enabling types for a part of the plurality of PDSCH transmissions being HARQ enabled, determine that the HARQ codebook only comprises HARQ feedback information corresponding to the part of PDSCH transmissions.

18. The apparatus according to claim 14, wherein the processing unit is specifically configured to:
in response to HARQ enabling types for a part of the plurality of PDSCH transmissions being HARQ enabled, determine that the HARQ codebook is empty.

19. The apparatus according to claim 18, wherein the processing unit is specifically configured to, in response to receiving an HARQ feedback indication from a network device, determine to send HARQ feedback information corresponding to the part of PDSCH transmissions to the network device.

20. The apparatus according to any one of claim 14 to 19, further comprising:
a transceiver unit, configured to feed back HARQ feedback information corresponding to the plurality of PDSCH transmissions to the network device on the specified HARQ feedback resource according to the HARQ codebook.

21. The apparatus according to claim 20, wherein the transceiver unit is specifically configured to:
in response to the HARQ codebook being empty, give up a feedback of the HARQ feedback information to the network device on the specified HARQ feedback resource; or
in response to the HARQ codebook being non-empty, feed back the HARQ feedback information in the HARQ codebook to the network device on the specified HARQ feedback resource.

22. An apparatus for receiving HARQ feedback information, applied to a network device, the apparatus comprising:
a processing unit, configured to determine, according to HARQ enabling types for a plurality of physical downlink shared channel (PDSCH) transmissions on a specified HARQ feedback resource, a reception mode of HARQ feedback information.

23. The apparatus according to claim 22, wherein the processing unit is specifically configured to:
in response to the HARQ enabling types for the plurality of PDSCH transmissions being HARQ enabled, determine to receive the HARQ feedback information on the specified HARQ feedback resource.

24. The apparatus according to claim 22, wherein the processing unit is specifically configured to:
in response to the HARQ enabling types for the plurality of PDSCH transmissions being HARQ disabled, determine not to receive the HARQ feedback information on the specified HARQ feedback resource; or
in response to the HARQ enabling types for the plurality of PDSCH transmissions being HARQ disabled, determine to receive the HARQ feedback information on the specified HARQ feedback resource and to discard received HARQ feedback information.

25. The apparatus according to claim 22, wherein the processing unit is specifically configured to:
in response to HARQ enabling types for a part of the plurality of PDSCH transmissions being HARQ enabled, determining to receive the HARQ feedback information on the specified HARQ feedback resource.

26. The apparatus according to claim 25, further comprising:
a transceiver unit, configured to in response to failing to receive the HARQ feedback information of a terminal device on the specified HARQ feedback resource, send an HARQ feedback indication to the terminal device to indicate the terminal device to feed back HARQ feedback information corresponding to the part of PDSCH transmissions.

27. A device for determining an HARQ codebook, comprising: a processor and a memory for storing a computer program, wherein when the computer program is executed by the processor, the device is caused to execute the method according to any one of claims 1 to 8.

28. A device for receiving HARQ feedback information, comprising: a processor and a memory for storing a computer program, wherein when the computer program is executed by the processor, the device is caused to execute the method according to any one of claims 9 to 13.

29. A device for determining an HARQ codebook, comprising:
an interface circuit for receiving and transmitting code instructions to a processor; and
the processor for executing the code instructions to perform the method according to any one of claims 1 to 8.

30. A device for receiving HARQ feedback information, comprising:
an interface circuit for receiving and transmitting code instructions to a processor; and
the processor for executing the code instructions to perform the method according to any one of claims 9 to 13.

31. A computer-readable storage medium storing instructions, wherein when the instructions are executed, the method according to any one of claims 1 to 8 is implemented.

32. A computer-readable storage medium storing instructions, wherein when the instructions are executed, the method according to any one of claims 9 to 13 is implemented.
